# EUROPÄISCHE PATENTANMELDUNG

(11) **EP 1 587 001 A1**
(43) Veröffentlichungstag der Anmeldung: **19.10.2005**
(21) Anmeldenummer: 05007837.7
(22) Anmeldetag: 09.04.2005
(51) Int. Cl.: G06F 12/14, G06F 1/00, G06K 7/00, G06K 19/073, G07F 7/10, H04B 1/59, H04L 9/30

(54) **Sicherheitseinrichtung für einen Transponder**

(30) Priorität: 14.04.2004 DE 102004018557; 05.02.2005 DE 102005005436
(71) Anmelder: ATMEL Germany GmbH, 74072 Heilbronn (DE)
(72) Erfinder: Friedrich, Ulrich, Dipl.-Ing. (FH), 74248 Ellhofen (DE); Ziebertz, Dirk, Dipl.-Ing., 74246 Eberstadt (DE)

(57) **Zusammenfassung**

Die Erfindung betrifft eine Sicherheitseinrichtung (1) für einen Transponder mit Kill- und/oder Cloak-Funktion, mit einer Speichereinrichtung (2), in der ein erstes, offenes Passwort (PW1) abgelegt ist, mit einem Eingang (5), in den ein zweites, geheimes Passwort (PW2) einkoppelbar ist, mit einer mit dem Eingang (5) verbundenen kryptologischen Einrichtung (4), die aus dem zweiten Passwort eine Prüfsumme (PW2') erzeugt, mit einer Vergleichseinrichtung, die die Prüfsumme und das erste Passwort miteinander vergleicht und die bei deren Übereinstimmung ein Kill- und/oder Cloak-Steuerbefehl (S1) zur Aktivierung und/oder Deaktivierung eines Kill- bzw. Cloak-Mechanismus erzeugt, welches an einem Ausgang (7) abgreifbar ist. Die Erfindung betrifft ferner ein Verfahren zum Konfigurieren einer Sicherheitseinrichtung, ein Verfahren zum Betreiben eines Transponders sowie einen Transponder.

## Beschreibung

Die Erfindung betrifft eine Sicherheitseinrichtung für einen Transponder mit Sicherheitsfunktion, insbesondere mit Kill- und/oder Cloak-Funktion. Die Erfindung betrifft ferner ein Verfahren zum Konfigurieren einer Sicherheitseinrichtung, ein Verfahren zum Betreiben eines Transponders sowie einen Transponder.

Die Erfindung liegt auf dem Gebiet der Transpondertechnologie und insbesondere im Bereich der kontaktlosen Kommunikation zum Zwecke der Identifikation. Wenngleich prinzipiell auf beliebige Kommunikationssystem anwendbar, werden die vorliegende Erfindung sowie die ihr zugrunde liegende Problematik in Bezug auf so genannte RFID-Kommunikationssysteme und deren Anwendungen erläutert. RFID steht dabei für "Radio Frequency Identification" steht. Zum allgemeinen Hintergrund dieser RFID-Technologie wird auf das "RFID-Handbuch" von Klaus Finkenzeller, Hanser Verlag, dritte aktualisierte Auflage, 2002 verwiesen.

Bei passiven und semipassiven Transpondern wird ein von einer Basisstation ausgesendetes elektromagnetisches Signal von dem Transponder aufgenommen und demoduliert. Passive Transponder weisen keine eigene Energieversorgung auf, so dass die im Transponder für die Demodulation, Dekodierung und Verarbeitung des empfangenen elektromagnetischen Signals benötigte Energie aus diesem elektromagnetischen Signal selbst entnommen werden muss. Neben der Energieübertragung erfolgt (über das so genannte Trägersignal oder Carriersignal) auch eine bidirektionale Datenkommunikation zwischen Basisstation und Transponder.

Eine bidirektionale Datenkommunikation zwischen Basisstation und Transponder besteht typischerweise aus einer Anfragesequenz und einer Antwortsequenz. Grundlage der bidirektionalen Datenübertragung zwischen Basisstation und Transponder bildet ein so genanntes Kommunikationsprotokoll, das neben den zu übertragenden Dateninformationen auch Steuerinformationen für die Datenkommunikation festlegt. Ein bekanntes RFID-Kommunikationsprotokoll für eine bekannte Datenkommunikation zwischen Basisstation und Transponder ist in der Deutschen Offenlegungsschrift DE 101 38 217 A1 beschrieben.

Ein gattungsgemäße RFID-Verfahren und System zur bidirektionalen Datenkommunikation ist auch Gegenstand des so genannten Palomar-Projekts, welches von der Europäischen Kommission im Rahmen des so genannten IST-Programms gegründet wurde. Hinsichtlich des Inhalts dieses Palomar-Projekts wird auf die diesbezügliche, allgemein zugänglich Veröffentlichung vom 11.01.2002, die als Arbeitsentwurf (working draft) ISO 18000-6 bei der ISO/IEC JTC1/SC31 eingereicht wurde, verwiesen.

Zum weiteren Hintergrund der bidirektionalen Datenkommunikation zwischen Basisstation und Transponder sei noch auf die Deutschen Offenlegungsschriften DE 102 04 317 A1, DE 100 50 878 A1 sowie die DE 102 04 346 A1 und die Europäische Patentschrift EP 473 569 B1 verwiesen.

Bei dieser Datenkommunikation zwischen Basisstation und Transponder werden je nach Applikation mehr oder weniger viele Daten zwischen Basisstation und Transponder ausgetauscht und ausgewertet.

Bei vielen Transponderanwendungen besteht der Bedarf, den Transponder dauerhaft oder lediglich zeitweise zu deaktivieren. Das dauerhafte Deaktivieren wird nachfolgend auch als "Kill-Funktion" und das zeitweise Deaktivieren als "Cloak-Funktion" bezeichnet.

Diese Anforderungen an einen Transponder, also das Erfordernis einen Kill-Mechanismus beziehungsweise eines Cloak-Mechanismus, kann vielerlei Gründe haben. Der Transponder ist nach einem zeitweisen oder dauerhaften Deaktivieren nicht mehr in der Lage, über ein von einer Basisstation ausgesendetes elektromagnetisches Feld angesprochen zu werden und entsprechend modulierte Antwortsignale zurück zur Basisstation zu senden. Auch ist er nicht in der Lage, andere Aktionen, wie zum Beispiel einen Speichervorgang oder Programmiervorgang, durchzuführen.

Ein Einsatzgebiet für mit einer solchen so genannten Kill-Funktionalität ausgestatteten Transponder sind so genannte Einwegtransponder (One Way Transponder), wie sie beispielsweise in Kaufhäusern zur Kennzeichnung von noch nicht verkauften Produkten und Gegenständen verwendet werden. Nach dem Verkaufen dieser Produkte soll der darin enthaltene Transponder möglichst einfach entfernt, deaktiviert, zerstört oder auf irgendeine andere Weise funktionsunfähig gemacht werden. Ein weiteres Einsatzgebiet sind zum Beispiel Einwegverpackungen.

Für Mehrwegprodukte, wie zum Beispiel Mehrwegverpackungen, Akten, etc., wären diese Funktionalität zwar ebenfalls denkbar, jedoch nicht so wünschenswert, wie bei den genannten Einwegtransponder. Bei diesen letzteren Einsatzgebieten, also beispielsweise bei Mehrwegverpackungen, findet insbesondere die Cloak-Funktion Verwendung. Dies ermöglicht es dem Nutzer, die jeweiligen, in der Mehrwegverpackung enthaltenen Produkte bedarfsgemäß über einen aktivierten Transponder zu identifizieren. Nach dieser Identifikation oder alternativ nach der Entfernung der entsprechenden Produkte aus der Mehrwegverpackung kann der in der Mehrwegverpackung enthaltene Transponder zeitweise deaktiviert werden, so dass er nicht unerwünschter Weise eine Datenkommunikation mit einer sich in der Nähe befindlichen Basisstation aufnimmt.

Diese Cloak-Funktionalität eignet sich auch insbesondere für solche Anwendungsgebiete, bei denen der Transponder sicherheitsrelevanten Produkten zugeordnet ist und somit auch sicherheitsrelevante Informationen enthält. In diesem Fall kann der Transponder zeitweise deaktiviert werden, beispielsweise dann, wenn die jeweiligen sicherheitsrelevanten Produkte in dieser Zeit nicht ausgelesen werden sollen, da sie beispielsweise transportiert werden.

Bei einer Implementierung einer Kill-Funktion beziehungsweise Cloak-Funktion in moderne RFID-Systemen sind jedoch spezielle Anforderungen an diese geknüpft:
- Das wichtigste Kriterium ist die Sicherheit dieser Funktionen, dass heißt bei einem Aktivieren einer Kill-/Cloak-Funktion darf diese nicht umgangen werden;
- Wesentlich ist auch, dass eine Implementierung der Kill-/Cloak-Funktion möglichst kostengünstig ist, um den Transponder dadurch nicht unnötig zu verteuern;
- Die Funktion soll möglichst einfach aktivierbar sein, vorteilhafterweise elektronisch unter Verwendung des Protokollmechanismus des Transponders;
- Schließlich soll ein erfolgreiches Aktivieren des Kill-/Cloak-Mechanismus sowie ein erfolgreiches Deaktivieren des Kill-/Cloak-Mechanismus überprüfbar sein.

Für die Implementierung einer Sicherheitseinrichtung in modernen Transpondern, die eine Kill-Funktion beziehungsweise Cloak-Funktion aufweisen, existieren mehrere Möglichkeiten, von denen einige allgemein bekannte Sicherheitseinrichtungen nachfolgend (nicht notwendigerweise abschließend) kurz beschrieben werden:

Die einfachste, jedoch nicht notwendigerweise beste Möglichkeit, die genannten Funktionalitäten zu implementieren, besteht darin, die jeweiligen Transponder von der entsprechenden Verpackung oder dem Produkt zu entfernen (Deaktivieren) und bei Bedarf wieder anzubringen (Aktivieren). Allerdings erfordert dies insbesondere bei einer Vielzahl von mit Transpondern ausgestatteten Produkten einen außerordentlichen Aufwand und ist daher wenig praktikabel. Zudem lassen sich die Transponder häufig nicht entfernen, da sie im Produkt eingebettet sind oder sogar Bestandteil dieser Produkte sind.

Eine weitere Möglichkeit besteht darin, die jeweiligen Transponder dauerhaft zu zerstören, beispielsweise durch mechanisches Zerstören, durch ein definiertes Durchbrennen einer im Transponder befindlichen Sicherung (Fuse-Mechanismus) oder auch durch Zerstörung der Transponderantenne. Alle Mechanismen gehen von der Zerstörung der Funktion des Transponders aus. Problematisch daran ist allerdings, dass man verifizieren möchte, ob die mit der Zerstörung einhergehende Funktionsunfähigkeit des Transponders erzielt wurde. In diesem Falle sind zerstörerische Eingriffe in den Transponder nicht geeignet, zumal diese gegebenenfalls sich auch wieder reparieren lassen, was allerdings möglichst vermieden werden soll.

Aus dien eben genannten Gründen werden bei modernen RFID-Systemen, die mit einer Kill-/Cloak-Funktion ausgestattet sind, diese Funktionen von dem Transponder elektronisch ausgelöst.

Gemäß einem ersten solchen Verfahren wird die Kill-Funktion durch Löschen zumindest eines Teiles des Speichers des Transponders aktiviert, was unmittelbar zu einer Stillegung des Transponders führt. Darüber hinaus wird ein entsprechendes Bit, welches die Stillegung des Transponders signalisiert, nach einem POR-Vorgang (POR = Power On Reset) oder zyklisch vom Transponder ausgelesen und in einem Flipflop gespeichert. Der Status des Flipflops sperrt dann die weitere Funktionalität des Transponders ab. Nachteilig an dieser Lösung ist aber, dass zum Beispiel durch Betriebsspannungsschwankungen oberhalb der POR-Schwelle das Flipflop seinen Speicherwert verlieren kann, so dass ein Zugriff auf den Transponder wieder möglich ist. Dies ist ein Zustand, den es allerdings möglichst zu vermeiden gilt.

Aus diesen Gründen werden bei modernen Transpondern die Kill-/Cloak-Funktionen durch einen Transponder-internen Protokollmechanismus aktiviert. Dabei wird dem Transponder auf Protokollebene ein vorzugsweise digitales Passwort übermittelt, das neben dem berechtigten Nutzer lediglich dem Transponder bekannt ist und das von der Basisstation typischerweise nicht auslesbar ist. Wird dieses Passwort dem Transponder übermittelt, dann wird die Kill-/Cloak-Funktion aktiviert. Je nach Bitbreite des digitalen Passworts kann damit eine gewünschte Sicherheit eingestellt werden.

Allerdings weist auch diese Lösung signifikante Nachteile auf.

Idealerweise sollte das Passwort lediglich demjenigen berechtigten Nutzer bekannt sein, der dazu berechtigt ist, eine Kill-/Cloak-Funktion bei einem Transponder zu aktivieren beziehungsweise zu deaktivieren. Allerdings ist dieses Passwort neben dem berechtigten Nutzer typischerweise auch anderen Personen zugänglich. Eine derartige Sicherheitssenke ergibt sich zwangsläufig dadurch, dass von dem berechtigten Nutzer zur Implementierung des Sicherheitssystems gewisse Informationen, beispielsweise über das verwendete Passwort und über den jeweiligen schaltungstechnischen Aufbau einer Sicherheitseinrichtung, an den Entwickler und/oder Hersteller des jeweils mit einer solchen Sicherheitseinrichtung ausgestatteten Transponder mitgeteilt werden müssen. Zwar werden in diesen Firmen diese Informationen naturgemäß sehr vertraulich gehandhabt, jedoch bleibt immer ein Restrisiko, dass diese vertraulichen Informationen nicht doch an einen unberechtigten Nutzer gelangen. Der berechtigte Nutzer kann daher nie gänzlich sicher sein, dass sein Passwort und damit der Zugang zu seiner Sicherheitseinrichtung nicht auch anderen Personenkreisen bekannt ist und von diesen verwendet wird.

Ein weiteres Problem besteht auch darin, dass die Anwender pragmatischerweise dazu neigen, die Gesamtzahl der verwendeten Passwörter einzuschränken, um ihren eigenen Logistikaufwand, insbesondere aus Kostengründen, möglichst einzuschränken. Zudem ist sehr häufig die Länge eines Passwortes protokollbedingt oder systembedingt begrenzt. Eine eingeschränkte Anzahl an Passwörtern und/oder eine begrenzte Länge dieser Passwörter erleichtert es einem unberechtigten Nutzer ebenfalls, diese Passwörter zu entschlüsseln.

Darüber hinaus ist zudem das Sicherheitsniveau einer solchen Sicherheitseinrichtung jeweils durch das Protokoll der Datenübertragung fixiert.

Insgesamt bedeutet dies allerdings, dass bei heutigen, allgemein bekannten Sicherheitseinrichtungen, die einen Transponder-internen Protokollmechanismus für die Realisierung der Kill-/Cloak-Funktion nutzen, insbesondere für sicherheitsrelevante Anwendungen keine ausreichende Sicherheit geboten wird. Dies ist ein Zustand, der insbesondere im Falle von sicherheitsrelevanten Produkten nicht akzeptabel ist und vor allem von vielen Kunden solcher Produkte nicht hingenommen wird.

Vor diesem Hintergrund liegt der vorliegenden Erfindung nun die Aufgabe zugrunde, ein sehr sicheres Deaktivieren eines Transponders zu ermöglichen. Insbesondere soll neben dem dauerhaften Deaktivieren (Kill-Mechanismus) zusätzlich bei Bedarf auch ein temporäres Deaktivieren (Cloak-Mechanismus) ermöglicht werden. Eine weitere Aufgabe besteht darin, dass die Funktion des temporären und/oder permanenten Deaktivierens von dem berechtigten Nutzer bedarfsgemäß auf einfache Weise auch anderen Nutzern zur Verfügung gestellt werden kann. Eine weitere Aufgabe besteht darin, dass das Passwort für das Deaktivieren veränderbar sein soll, ohne dass dadurch eine Einschränkung der Sicherheit einher geht.

Erfindungsgemäß wird zumindest eine der obigen Aufgaben durch eine Sicherheitseinrichtung für einen Transponder mit den Merkmalen des Patentanspruchs 1, ein Verfahren zum Konfigurieren einer Sicherheitseinrichtung mit den Merkmalen des Patentanspruchs 9, ein Verfahren zum Betreiben eines Transponders mit den Merkmalen des Patentanspruchs 19 sowie einen Transponder mit den Merkmalen des Patentanspruchs 22 gelöst.

Demgemäß ist vorgesehen:
- Eine Sicherheitseinrichtung für einen Transponder mit Sicherheits-funktion, insbesondere mit Kill- und/oder Cloak-Funktion, mit einer Speichereinrichtung, in der ein erstes, offenes Passwort abgelegt ist, mit einem Eingang, in den ein zweites, geheimes Passwort einkoppelbar ist, mit einer mit dem Eingang verbundenen kryptologischen Einrichtung, die aus dem zweiten Passwort eine Prüfsumme erzeugt, mit einer Vergleichseinrichtung, die die Prüfsumme und das erste Passwort miteinander vergleicht und die bei deren Übereinstimmung ein einen Sicherheitssteuerbefehl, insbesondere einen Kill- und/oder Cloak-Steuerbefehl, zur Aktivierung und/oder Deaktivierung eines Sicherheitsmechanismus, insbesondere eines Kill- bzw. Cloak-Mechanismus, erzeugt, welcher an einem Ausgang abgreifbar ist. (Patentanspruch 1)
- Ein Verfahren zur Konfigurieren einer erfindungsgemäßen Sicherheitseinrichtung, bei dem zur Erhöhung der Sicherheit beim Betreiben der Sicherheitseinrichtung die interne Verschaltung der kryptologischen Einrichtung komplexer ausgestaltet wird. (Patentanspruch 9)
- Ein Verfahren zum Betreiben eines Transponders mit einer erfindungsgemäßen Sicherheitseinrichtung, bei für die drahtlose Datenübertragung von einer Basisstation zu dem Transponder ein hochfrequentes elektromagnetischen Trägersignal vorgesehen ist, auf welchem Informationspakete aufmoduliert sind, wobei jeweils ein Informationspaket einen Kopfabschnitt, einen Mittelabschnitt und einen abschließenden Endabschnitt aufweist, wobei das zweite Passwort an einer vorgegebenen Stelle innerhalb des Informationspakets angeordnet wird. (Patentanspruch 19)
- Ein Transponder zur Datenkommunikation mit zumindest einer Basisstation, mit einer Sende-/Empfangseinrichtung zum Empfangen hochfrequenter Trägersignale einer Basisstation, mit einer Steuereinrichtung, die die Datenkommunikation mit der zumindest einen Basisstation steuert, mit einer erfindungsgemäßen Sicherheitseinrichtung. (Patentanspruch 22)

Die der vorliegenden Erfindung zugrunde liegende Erkenntnis besteht darin, dass ein Sicherheitssystem zum dauerhaften oder temporären Aktiveren oder Deaktivieren eines Transponders gegenüber unberechtigten Benutzern noch so sicher sein kann, für den Fall aber wirkungslos ist, dass dieses Sicherheitssystem einem unberechtigten Benutzer bekannt ist. Die Idee der vorliegenden Erfindung besteht nun darin, dass insbesondere auch der Hersteller der jeweiligen Transponder und damit der darin implementierten Sicherheitssysteme nicht alle Informationen über dieses Sicherheitssystem kennt. Insbesondere sieht die Erfindung die Verwendung zumindest zweier unterschiedlicher Passwörter vor, wobei zumindest eines dieser Passwörter lediglich dem berechtigten Nutzer bekannt ist. Der berechtigte Nutzer ist zum Beispiel der Eigentümer des Transponder, der diesen Transponder beziehungsweise das entsprechende, diese Transponder aufweisende RFID-System bei dem Hersteller kauft und betreibt.

Das erste, offene Passwort, welches also dem Hersteller und dem berechtigten Nutzer bekannt ist, wird dem Hersteller mitgeteilt und beispielsweise in einer eigens dafür vorgesehenen Speichereinrichtung im Transponder hinterlegt. Aus dem zweiten, geheimen Passwort, welches lediglich dem berechtigten Nutzer des Transponders beziehungsweise des entsprechenden RFID-Systems bekannt ist, wird eine Prüfsumme abgeleitet, welche mit dem ersten Passwort verglichen wird. Bei einem ordnungsgemäßen Betrieb, das heißt im Falle der Nutzung durch den berechtigten Nutzer, ist das erste, offene Passwort und die aus dem zweiten, geheimen Passwort abgeleitete Prüfsumme identisch. Erst bei Identität des ersten, offenen Passworts und der von dem zweiten, geheimen Passwort abgeleiteten Prüfsumme wird ein Sicherheitssteuersignal ausgegeben, über welches der Sicherheitsmechanismus, also beispielsweise der Kill-Mechanismus beziehungsweise der Cloak-Mechanismus, aktiviert beziehungsweise auch deaktiviert wird.

Wesentlich für das erfindungsgemäße Verfahren ist, dass aus dem zweiten, lediglich dem berechtigten Nutzer bekannten Passwort eine Prüfsumme abgeleitet wird, die nicht ohne weiteres von dem Hersteller und/oder einem unberechtigtem Nutzer nachvollziehbar ist. Zu diesem Zwecke ist erfindungsgemäß eine kryptologische Einrichtung vorgesehen, die aus dem zweiten, geheimen Passwort die Prüfsumme generiert. Diese kryptologische Einrichtung, deren ungefährer oder genauer Aufbau zum Beispiel lediglich dem Hersteller und dem berechtigten Nutzer bekannt ist, erzeugt somit aus dem eingangsseitig eingekoppelten, geheimen zweiten Passwort ausgangsseitig die Prüfsumme. Dem Hersteller ist zwar in diesem Falle die ausgangsseitig erzeugte Prüfsumme sowie der (ungefähre) schaltungstechnische Aufwand dieser kryptologischen Einheit bekannt. Nicht bekannt ist im jedoch das zweite, geheime Passwort, welches nach wie allein dem berechtigten Nutzer bekannt ist.

Gegenstand der Erfindung ist somit ein geteiltes Geheimnis, wobei der berechtigte Nutzer nur einen Teil dieses Geheimnisses und dies auch nur dem Hersteller der Transponder bzw. des entsprechenden RFID-Systems mitteilt. Bestandteil dieses dem Hersteller mitgeteilten Geheimnisses ist zum Einen das erste, offene Passwort und zum Anderen eine von dem berechtigten Nutzer vorgegebenen Hardwarekonfiguration der kryptologischen Einrichtung und damit der Sicherheitseinrichtung.

Vorteilhafte Ausgestaltungen und Weiterbildungen der Erfindung sind in den Unteransprüchen sowie in der Beschreibung unter Bezugnahme auf die Zeichnung entnehmbar.

Die kryptologische Einrichtung stellt in der einfachsten Form eine Berechnungseinrichtung zur Berechnung der Prüfsumme dar, wobei sich diese Berechnung aus der mehr oder weniger komplexen internen Verschaltung der einzelnen Elemente der Berechnungseinheit ergibt. Die internen Verschaltung ist dabei nicht ohne weiteres ermittelbar.

Da der Aufbau dieser kryptologischen Einrichtung lediglich dem Hersteller, nicht aber einem unberechtigtem Benutzer bekannt ist, ist es für Letzteren quasi unmöglich, zu dem Inhalt des zweiten Passwortes und damit zu einer Zugangsberechtigung zum Aktivieren beziehungsweise Deaktivieren der Sicherheitseinrichtung zu gelangen. Der Aufbau und die Funktion dieser kryptologischen Einheit ist derart ausgestaltet, dass es bei Kenntnis des eingangsseitigen zweiten, geheimen Passwortes sowie dem genauen Aufbau der kryptologischen Einheit relativ einfach möglich ist, die entsprechende Prüfsumme zu ermitteln (Aufwärtsberechnung). Hingegen ist es außerordentlich aufwändig, aus der Kenntnis der Prüfsumme auf das zweite, geheime Passwort zu schließen, da eine Rückwärtsberechnung zur Ermittlung des zweiten, geheimen Passworts aufgrund der je nach Aufbau dieser kryptologischen Einrichtung mehr oder weniger großen Anzahl an möglichen Permutationen nur mit außerordentlich hohem Rechenaufwand möglich ist. Zumindest ist dieser Aufwand deutlich größer als der Aufwand für die Ermittlung der Prüfsumme aus dem zweiten, geheimen Passwort.

Die kryptologische Einrichtung bildet somit in Kombination mit dem zweiten, geheimen Passwort den Hauptbestandteil des Sicherheitsmechanismus.

Insgesamt führt dies zu einer signifikanten Steigerung des Sicherheitsniveaus, da dem Hersteller zwar Teile der Sicherheitseinrichtung, insbesondere das erste, offene Passwort und die entsprechende Hardware-Verschaltung der kryptologischen Einrichtung, bekannt sind. Allerdings fehlt ihm der wesentliche Bestandteil in Form des zweiten, geheimen Passworts, welches ihn in die Lage versetzen würde, die Sicherheitseinrichtung zu betreiben. Noch schwieriger wird es für einen unberechtigten Nutzer, der lediglich das zweite, offene Passwort beispielsweise durch Auslesen des Speichers kennt. Dem unberechtigten Nutzer ist allerdings der genaue schaltungstechnische Aufbau der kryptologischen Einrichtung sowie die entsprechende Hardwarekonfiguration nicht bekannt, so dass es für ihn quasi unmöglich ist, Zugang zu der Sicherheitseinrichtung zu bekommen.

Je nach Komplexität der kryptologischen Einrichtung ist also der Aufwand zum Ermitteln des zweiten, geheimen Passworts mehr oder weniger groß. Dieser außerordentlich hohe Rechenaufwand steht dabei typischerweise in keinem Verhältnis zu den jeweiligen Kosten des zu schützenden Gegenstandes, insbesondere dann nicht, wenn der unberechtigte Nutzer sich nicht sicher sein kann, dass es sich bei den entsprechenden Transpondern um solche Transponder mit sicherheitsrelevanten Informationen, wie zum Beispiel Transponder für Rüstungsgüter, oder beispielsweise um solche Transponder mit nicht sicherheitsrelevanten Informationen, wie zum Beispiel Transponder für Konsumgüter, handelt. In jedem Falle müsste er bei jedem dieser Transponder den gleichen Aufwand betreiben, um überhaupt Zugang zu der Sicherheitseinrichtung zu bekommen.

Der besondere Vorteil der vorliegenden Erfindung besteht auch darin, dass erfindungsgemäß auf sehr einfache, jedoch nichts desto trotz sehr effektive Weise durch Vergleich zweier Passwörter ein Steuersignal zum Aktivieren beziehungsweise Deaktivieren eines Kill- oder Cloak-Mechanismus gewonnen werden kann.

Vorteilhafte Ausgestaltungen und Weiterbildungen der Erfindung sind in den Unteransprüchen sowie in der Beschreibung unter Bezugnahme auf die Zeichnung entnehmbar.

In einer vorteilhaften Ausgestaltungen ist die kryptologische Einrichtung als Berechnungseinrichtung zur Berechnung der Prüfsumme ausgebildet.

Die erfindungsgemäße kryptologische Einrichtung kann sowohl Hardware-basiert als auch Software-basiert implementiert werden, wobei sie im Falle einer Softwarelösung zum Beispiel auch in der Basisstation angeordnet sein kann.

In einer sehr vorteilhaften Ausgestaltung ist die kryptologische Einrichtung als so genanntes Linear-Feedback-Shift-Register oder kurz als LFSR-Register ausgebildet. Je nach Komplexität dieses LFSR-Registers würde der Aufwand zum Ermitteln des zweiten, geheimen Passworts mehr oder weniger groß sein.

In einer sehr vorteilhaften Ausgestaltung ist die kryptologische Einrichtung beziehungsweise das LFSR-Register als CRC-Register (CRC = Cyclic Redundancy Check) ausgebildet. Ein solches CRC-Register ist ohnehin in jedem Transponder implementiert und kann so sehr vorteilhaft zusätzlich auch für die erfindungsgemäße Sicherheitseinrichtung zum Aktivieren oder Deaktivieren eines Kill- beziehungsweise Cloak-Mechanismus verwendet werden. Vorteilhafterweise ist so kein zusätzlicher schaltungstechnischer Aufwand erforderlich, was insgesamt den Transponder trotz gesteigerter Funktionalität in Kombination mit einem sehr hohen Sicherheitsniveau sehr kostengünstig realisieren lässt. Die Verwendung eines CRC-Registers ist also Chipflächen sparend und damit kostengünstig.

Eine weitere Erhöhung des Sicherheitsniveaus der erfindungsgemäßen Sicherheitseinrichtung kann wie folgt realisiert werden:

Zur Erhöhung des Sicherheitsniveaus kann in einer ersten Ausgestaltung die Komplexität der kryptologischen Einrichtung erhöht werden, beispielsweise indem die interne Verschaltung komplexer ausgestaltet wird.

Im Falle eines CRC-Registers oder eines LFSR-Registers kann dies beispielsweise durch Erhöhung der Bitzahl realisiert werden. Beispielsweise würde schon durch Erweiterung eines 8-Bit-CRC-Registers als 16-Bit-CRC-Register der erforderliche Rechenaufwand für ein Rückrechnen des Eingangssignals und damit des zweiten, geheimen Passworts exorbitant steigen.

Häufig ist eine Erweiterung des CRC-Registers allerdings nicht möglich, da dies zum Beispiel durch die Applikation sowie durch das Protokoll der Datenübertragung vorgegeben ist. Eine einer Erweiterung des CRC-Registers gleichkommende Funktion ergibt sich allerdings auch dadurch, dass das CRC-Register zur Gewinnung einer Prüfsumme mehrfach durchlaufen wird. Da dem unberechtigten Nutzer nicht bekannt ist, wie häufig ein CRC-Register zur Gewinnung der Prüfsumme durchlaufen wird, wird ein Durchbrechen dieses Sicherheitsmechanismus dadurch zusätzlich erschwert.

Die kryptologische Einrichtung weist zumindest einen Ausgangsport auf, aus dem die Prüfsumme gewonnen wird. Dieser Ausgangsport greift an einer bestimmten Stelle (Abgriff) der kryptologischen Einrichtung, beispielsweise ein an einem fest vorgegebenen Flipflop des LFSR-Registers beziehungsweise CRC-Registers, die dort anliegende Prüfsumme ab, welche dann in der Vergleichseinrichtung mit dem ersten, offenen Passwort verglichen wird. Da diese genaue Position des Ausgangsports dem unberechtigten Nutzer nicht bekannt ist, erschwert ihm dies die Rückrechnung auf das zweite, geheime Passwort. Insbesondere wird dies noch dann erschwert, wenn der Abgriff an einem höherwertigen Flipflop des LFSR-Registers beziehungsweise CRC-Registers statt findet, da ein unberechtigte Nutzer in diesem Falle sämtliche Permutationen, die sich aus der internen Verschaltung der vor diesem Flipflop angeordneten weiteren Flipflops ergeben, zurückrechnen muss.

Neben der Verwendung eines einzelnen Ausgangsports zur Gewinnung der Prüfsumme können selbstverständlich auch mehrere Ausgangsports und damit mehrere Abgriffe, die ein jeweiliges Signal an verschiedenen Stellen des LFSR-Registers beziehungsweise CRC-Registers abgreifen, verwendet werden. Durch einfache Verknüpfung dieser so gewonnenen Signale wird dann die Prüfsumme ermittelt werden. Zusätzlich kann durch unterschiedliche Verknüpfung dieser verschiedenen abgegriffenen Signale ebenfalls eine Prüfsumme ermittelt werden.

Eine weitere Möglichkeit zur Erhöhung des Sicherheitsniveaus besteht darin, dass in der kryptologischen Einrichtung zur Gewinnung der Prüfsumme zumindest eine Verknüpfungseinrichtung vorgesehen ist, Die Verknüpfungseinrichtung ist mit zumindest einem Abgriff der kryptologischen Einrichtung verbunden, die die von der kryptologischen Einrichtung ausgangsseitig bereitgestellten Signale miteinander verknüpft und die daraus die Prüfsumme erzeugt.

Die Verknüpfungseinrichtung weist beispielsweise UND-Verknüfungen, ODER-Verknüpfungen, XOR-Verknüpfungen und/oder Modulo-Verknüpfungen, etc. auf. Insbesondere lässt sich dabei durch die einzelnen verwendeten Verknüpfungen (UND, XOR, Modulo, etc.), die Art der Verknüpfung (über Kreuz, parallel, in Reihe, rückgekoppelt, etc.) sowie die Anzahl der verwendeten Verknüpfungen eine beliebig komplex ausgestaltete Verknüpfungseinrichtung bereit stellen.

Grundsätzlich kann das vom berechtigten Nutzer verwendete zweite, geheime Passwort an einer beliebigen Stelle innerhalb des Protokolls einer Datenübertragung sein.

Insbesondere bei einer Ausgestaltung der kryptologischen Einrichtung als CRC-Register ist es besonders vorteilhaft, wenn das zweite, geheime Passwort im Bereich des CRC-Sicherungsfeldes des Informationspaketes eingefügt wird. Das zweite, geheime Passwort kann hier zusätzlich oder anstatt der CRC-Information an den Transponder übermittelt werden.

In einer besonders vorteilhaften Ausgestaltung ist das zweite, geheime Passwort im Bereich des Endabschnittes angeordnet. Dieser Endabschnitt wird häufig auch als EOT-Endabschnitt (EOT = End Of Transmission) bezeichnet. Der EOT-Endabschnitt weist im Falle des eingangs beschriebenen Palomarsystems typischerweise zwei EOF-Symbole (EOF = End Of File) auf. In einer sehr vorteilhaften Ausgestaltung kann zwischen diesen beiden EOF-Symbolen eine zweite Kommandoebene eingefügt werden, die allgemein zur Steuerung, zur Datenübertragung oder speziell im vorliegenden Fall zur Übertragung des zweiten, geheimen Passwortes genutzt wird. Der besondere Vorteil dieser Verwendung besteht darin, dass das Protokoll für die Datenkommunikation hier nicht geändert werden muss, so dass der berechtigte Nutzer das zweite, geheime Passwort bei Bedarf lediglich im Bereich des EOT-Endabschnitts zwischen den beiden EOF-Symbolen übertragen kann, ohne dass die Datenkommunikation zwischen Basisstation und Transponder dadurch gestört werden würde.

In einer ebenfalls sehr vorteilhaften Ausgestaltung kann das zweite, geheime Passwort zusätzlich oder alternativ auch im Kopfabschnitt eines Informationspaketes angeordnet sein.

In einer weiteren, sehr vorteilhaften Ausgestaltung kann der berechtigte Nutzer das zweite Passwort auch anderen berechtigten Nutzern zur Verfügung stellen. Hierzu kann beispielsweise eine zentrale Datenbank vorgesehen sein, in die der berechtigte Nutzer das zweite, geheime Passwort ablegt. Auf dieses zweite Passwort haben dann andere Nutzer, die von dem berechtigten Nutzer dazu ermächtigt oder autorisiert wurden, einen Zugriff auf das zweite, geheime Passwort, indem sie beispielsweise bei der zentralen Datenbank die genaue Adresse, ein Codewort oder irgendeine andere Authentifikation angeben. Diese anderen Nutzer haben nun ähnlich wie der Berechtigte Nutzer Zugriff auf die Sicherheitseinrichtung des Transponders und können diesen beispielsweise durch Deaktivierung oder Aktivierung des Kill-Mechanismus oder Cloak-Mechanismus betreiben. Diese Funktionalität ist insbesondere dann von besonderem Vorteil, wenn der Transponder zur Identifikation sicherheitsrelevanter Gegenstände vorgesehen ist und somit auch sicherheitsrelevante Informationen aufweist. Der berechtigte Nutzer kann bei einem Transport dieser Gegenstände zu anderen Nutzern die Funktion der Sicherheitseinrichtung eines Transponders durch das eben beschriebene erfindungsgemäße Verfahren zeitweise deaktivieren.

In einer weiteren, ebenfalls sehr vorteilhaften Ausgestaltung der Erfindung ist vorgesehen, dass der berechtigte Nutzer, der allein das zweite, geheime Passwort kennt, die entsprechenden Transponder beziehungsweise die mit diesen Transpondern ausgestatteten Gegenstände an einen zweiten berechtigten Nutzer übergibt, beispielsweise verkauft. Bei dieser Übergabe teilt der erste berechtigte Nutzer dem zweiten berechtigten Nutzer mit der Übergabe der Gegenstände beziehungsweise der entsprechenden Transponder das erste, offene und zweite, geheime Passwort mit, so dass dieser zweite berechtigte Nutzer nunmehr ebenfalls die erfindungsgemäße Sicherheitseinrichtung betreiben kann. Allerdings besteht hier das Problem, dass in diesem Falle der erste berechtigte Nutzer, der nunmehr nicht mehr berechtigt sein soll, unerwünschter Weise noch die entsprechenden Passwörter kennt und damit Zugriff auf die Sicherheitseinrichtung der entsprechenden Transponder hat. Um dies zu verhindern ist die erfindungsgemäße Sicherheitseinrichtung derart ausgestaltet, dass auch eine Veränderung des zweiten, geheimen Passworts durch einen berechtigten Nutzer möglich ist.

Zu diesem Zwecke gibt der zweite berechtigte Nutzer ein geändertes zweites Passwort vor, aus der sich aufgrund der internen Verschaltung der kryptologischen Einrichtung eine Prüfsumme errechnet. Diese Prüfsumme stellt gleichermaßen das erste, offene Passwort dar. Dieses geänderte erste, offene Passwort wird nun in der Speichereinrichtung des Transponders hinterlegt. Der erste Nutzer ist nun nicht mehr berechtigt und ist auch nicht mehr in der Lage, durch die ihm bekannten ersten und zweiten Passwörter einen Zugriff auf die Sicherheitseinrichtung des Transponders zu erhalten. Der zweite nunmehr ausschließlich berechtigte Nutzer kann die Kombination aus den geänderten ersten und zweiten Passwörtern nun seinerseits in einer zentralen Datenbank hinterlegen und bedarfsgemäß nun damit anderen Nutzern zur Verfügung stellen.

In einer vorteilhaften Ausgestaltung wird das zweite Passwort geändert und aus dem geänderten zweiten Passwort unter Verwendung der kryptologischen Einrichtung und/oder einer Verknüpfungseinrichtung eine geänderte Prüfsumme ermittelt, die dann als neues erstes Passwort in der Speichereinrichtung abgelegt wird.

In einer vorteilhaften Ausgestaltung wird die Änderung des zweiten Passwortes nach einer vorgegebenen Anzahl an Zugriffen auf die Sicherheitseinrichtung, insbesondere nach jedem Zugriff auf die Sicherheitseinrichtung geändert.

In einer vorteilhaften Ausgestaltung erfolgt die Änderung des zweiten Passwortes automatisch durch Verwendung einer Zufallszahl.

Die Erfindung wird nachfolgend anhand der in den schematischen Figuren der Zeichnung angegebenen Ausführungsbeispielen näher erläutert. Es zeigen dabei:
- Figur 1: ein Blockschaltbild zur Darstellung des erfindungsgemäßen Verfahrens zur Aktivierung eines Kill-Mechanismus bzw. eines Cloak-Mechanismus;
- Figur 2: ein Blockschaltbild zur Darstellung einer besonders vorteilhaften Weiterbildung des erfindungsgemäßen Verfahrens;
- Figur 3: die Struktur (Protokoll) eines Informationspaketes für eine Datenkommunikation zwischen Basisstation und Transponder, bei der zum Aktivieren einer Sicherheitseinrichtung im Transponder ein Passwort übertragen wird;
- Figur 4: anhand eines Blockschaltbildes den Aufbau eines RFID-Kommunikationssystems, enthaltend eine Basisstation und zumindest einen mit einer erfindungsgemäßen Sicherheitseinrichtung ausgestatteten Transponder zur Durchführung des erfindungsgemäßen Verfahrens;
- Figur 5: ein schematisches Blockschaltbild zur Darstellung einer vorteilhaften Anwendung des erfindungsgemäßen Systems beziehungsweise eines erfindungsgemäßen Datenkommunikationssystems.

In den Figuren der Zeichnung sind gleiche beziehungsweise funktionsgleiche Elemente, Daten und Signale - sofern nichts Anderes angegeben ist - mit denselben Bezugszeichen versehen worden.

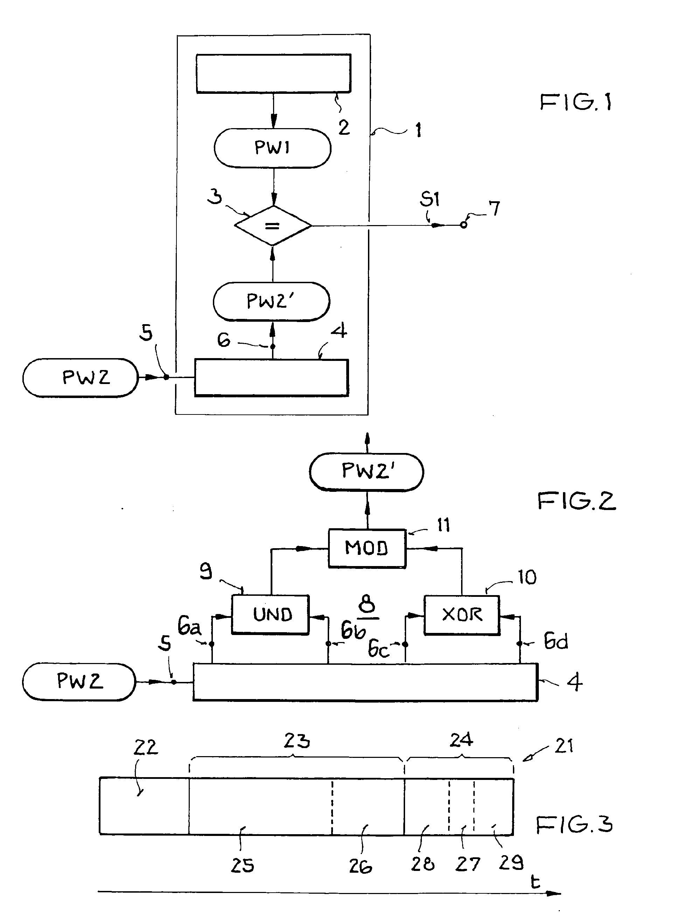

Figur 1 zeigt anhand eines schematischen Blockschaltbildes den Aufbau und die Funktionsweise einer erfindungsgemäßen Sicherheitseinrichtung zum Aktivieren beziehungsweise Deaktivieren eines Kill-Mechanismus oder eines Cloak-Mechanismus.

In Figur 1 ist die erfindungsgemäße Sicherheitseinrichtung mit Bezugszeichen 1 bezeichnet. Die Sicherheitseinrichtung 1 weist einen Speicher 2, eine Vergleichseinrichtung 3 sowie eine kryptologische Einrichtung 4 auf.

Bei dem Speicher 2 kann es sich um jeden beliebigen Speicher handeln, beispielsweise um einen gängigen flüchtigen oder nicht flüchtigen Halbleiterspeicher, wie einem DRAM, SRAM, EPROM, EEPROM, etc., oder um eine fest verdrahtete Logikschaltung mit Speicherfunktionalität, wie zum Beispiel eine FPGA- oder PLD-Schaltung, handeln. Der Speicher 2 kann als Bestandteil des Speichers eines Transponders ausgebildet sein oder als gesonderter der Sicherheitseinrichtung 1 ausgebildet sein. In dem Speicher 2 ist ein erstes, offenes Passwort PW1 abgelegt.

Die Vergleichereinrichtung 3 kann zum Beispiel ein herkömmlicher digitaler Komparator sein. Denkbar wäre auch, dass die Funktion der Vergleichereinrichtung 3 durch eine ohnehin bei einem Transponder vorgesehene Logikschaltung oder durch eine programmgesteuerte Einrichtung erfüllt wird. Die Vergleichseinrichtung 3 ist mit einem Ausgang 7 der Sicherheitseinrichtung 1 verbunden.

Im vorliegenden Ausführungsbeispiel sei angenommen, dass die kryptologische Einrichtung 4 als 16-Bit-CRC-Register ausgebildet ist. Das CRC-Register 4 ist mit einem Eingang 5 der Sicherheitseinrichtung 1 verbunden. Über den Eingang 5 ist dem CRC-Register 4 ein zweites, lediglich einem berechtigten Nutzer bekanntes Passwort PW2 zuführbar. Aufgrund der internen Verschaltung des CRC-Registers 4, welches zum Beispiel Bestandteil eines ohnehin im Transponder vorgesehenen CRC-Registers ist, wird eine aus dem zweiten Passwort abgeleitete Prüfsumme PW2' ermittelt, die an einem Abgriff 6 des CRC-Registers 4 auskoppelbar ist.

Der genaue Aufbau und die Funktionsweise eines solchen CRC-Registers ist allgemein bekannt und beispielsweise ausführlich in dem eingangs beschriebenen Buch von Klaus Finkenzeller, RFID-Handbuch, Hansa Verlag, dort insbesondere auf den Seiten 200 bis 203 beschrieben, so dass nachfolgend darauf nicht nachfolgend näher eingegangen werden muss.

Aus dem Speicher 2 wird ferner das erste Passwort PW1 ausgekoppelt und in der Vergleichseinrichtung 3 zusammen mit der mittels des CRC-Registers 4 ermittelten Prüfsumme PW2' verglichen. Stimmen das Passwort PW1 und die Prüfsumme PW2' überein, dann wird ein Steuersignal S1 erzeugt, welches am Ausgang 7 der Sicherheitseinrichtung 1 abgreifbar ist.

Erfindungsgemäß sind die beiden Passwörter PW1, PW2 nun von einem berechtigten Nutzer derart aufeinander abgestimmt, dass unter Berücksichtigung der internen Verschaltung des CRC-Registers 4 sich eine Prüfsumme PW2' ergibt, die dem im Speicher 2 abgelegten ersten Passwort PW1 entspricht, dass heißt im Falle eines eingekoppelten zweiten Passworts PW1 gilt: PW1' = PW2.

Figur 2 zeigt ein Blockschaltbild zur Darstellung einer besonders vorteilhaften Weiterbildung des erfindungsgemäßen Verfahrens.

Figur 2 zeigt eine Erweiterung der Sicherheitseinrichtung zur Gewinnung der Prüfsumme PW2' aus dem zweiten geheimen Passwort PW2. Im Unterschied zu dem Ausführungsbeispiel in Figur 1 weist das CRC-Register hier vier Abgriffe 6a - 6d auf, die an unterschiedlichen Stellen des CRC-Registers 4 Prüfsignale abgreifen.

Zur Gewinnung der Prüfsumme PW2' aus diesen Prüfsignalen ist eine Verknüpfungseinrichtung 8 vorgesehen. Im vorliegenden Ausführungsbeispiel weist die Verknüpfungseinrichtung 8 eine UND-Verknüpfung 9, eine XOR-Verknüpfung 10 sowie eine Modulo-Verknüpfung 11 auf. Die UND-Verknüpfung 9 ist eingangsseitig mit den Abgriffen 6a, 6b verbunden. Die XOR-Verknüpfung 10 ist eingangsseitig mit den Abgriffen 6c, 6d verbunden. Ausgangsseitig sind die beiden Verknüpfungen 9, 10 mit den Eingängen einer nachgeschalteten Modulo-Verknüpfung 11 verbunden, die ausgangsseitig ein digitales Signal mit der Prüfsumme PW2' bereitstellt.

An dieser Stelle sei erwähnt, dass die Ausgestaltung in Figur 2 lediglich beispielhaft dargestellt wurde und selbstverständlich beliebig, beispielsweise durch Einführung zusätzlicher Verknüpfungselemente oder weiterer Abgriffe komplexer ausgestaltet werden kann.

Figur 3 zeigt zunächst die grundsätzliche Struktur eines Informationspaketes 21, wie es für eine Datenkommunikation zwischen einer Basisstation und einem Transponder verwendet wird und wie es beispielsweise aus der eingangs genannten Offenlegungsschrift DE 101 38 217 A1 heraus bekannt ist.

Das Informationspaket 21 weist einen Kopfabschnitt 22, einen Mittelabschnitt 23 sowie einen Endabschnitt 24 auf.

In dem Kopfabschnitt 22 werden zum Beispiel die Anzahl der zu übertragenden Datensymbole sowie deren Kennung definiert, um so feststellen zu können, an welcher genauen Position ein jeweiliges Feld innerhalb des Mittelabschnittes 23 beziehungsweise des Endabschnittes 24 beginnt. Zusätzlich oder alternativ kann dies auch über das entsprechend Kommando selbst erfolgen. Insbesondere gibt der Kopfabschnitt 2 auch Referenzzeiten vor, die für die weitere Datenübertragung im Mittelabschnitt 23 verwendet werden. Über den Kopfabschnitt 22 wird auch die Geschwindigkeit der Datenkommunikation zwischen Basisstation und Transponder festgelegt, beispielsweise über die Frequenz eines freilaufenden Oszillators im Transponder. Darüber hinaus können in einer sehr vorteilhaften Ausgestaltung im Kopfabschnitt 22 auch Steuerinformationen für die dem Kopfabschnitt 22 nachfolgenden Felder des Mittelabschnittes 23 und des Endabschnittes 24 enthalten sein.

In diesem Zusammenhang wird auch auf die deutsche Offenlegungsschrift DE 101 38 217 A1 verwiesen, die insbesondere hinsichtlich des Steuerungsmechanismus über den Kopfabschnitt 22 eines Datenprotokolls, mit welchem die Anzahl der zur Kodierung im Datenbereich verwendeten Symbole und deren Kennung definiert wird, hiermit vollinhaltlich in die vorliegende Patentanmeldung mit einbezogen wird.

Der Mittelabschnitt 23 enthält ein Datenfeld 25 sowie ein diesem Datenfeld 25 unmittelbar nachgeschaltetes Sicherungsfeld 26 (in Figur 3 gestrichelt dargestellt), welches zum Beispiel als CRC-Sicherungsfeld 26 ausgebildet ist. Mittelabschnitt 23 werden kodierte Datensymbole übertragen. Im Je nach der gewünschten Applikation können hier die unterschiedlichsten Datenstrukturen (long command, short command) vorgesehen sein, auf die jedoch hier nicht näher eingegangen werden soll.

Der Inhalt des Endabschnitts 24 zeigt dem jeweiligen Empfänger des gesendeten Informationspakets 21 das Ende desselben an. Im Falle eines eingangs beschriebenen Palomarsystems ist der Endabschnitt ein so genannter EOT-Endabschnitt ausgebildet und weist genau zwei EOF-Symbole 28, 29 auf. Vorteilhafterweise ist zwischen den beiden EOF-Symbolen 28, 29 ein zusätzliches Feld 27 vorgesehen (in Figur 3 gestrichelt dargestellt).

Erfindungsgemäß kann dieses zusätzliche Feld 27 nun dazu vorgesehen sein, das zweite, lediglich dem Nutzer bekannte Passwort PW2 an den Transponder zu übertragen, ohne dass damit die Datenkommunikation beeinträchtigt würde. Der berechtigte Nutzer kann nun durch Verwendung irgendeiner Basisstation eine entsprechend Figur 3 dargestellte Datensequenz 21 senden, wobei im Bereich des Endabschnitts 24 das zweite, geheime Passwort PW2 in dem zusätzlichen Feld 27 einfügt ist. Auf diese Weise wird neben der im Datenfeld 25 ohnehin vorhandenen Kommandoebene eine zweite, zusätzliche Kommandoebene geschaffen, die für die Datenkommunikation oder für die Übertragung sicherheitsrelevanter Informationen genutzt werden kann.

Zusätzlich oder alternativ kann das Passwort PW2 auch in dem CRC-Sicherungsfeld 26 angeordnet sein (in Figur 3 nicht dargestellt). Zusätzlich oder alternativ kann das Passwort PW2 auch in dem Datenfeld 25, beispielsweise in dessen Kommandofeld, angeordnet sein. Zusätzlich oder alternativ kann das Passwort PW2 auch in dem Kopfabschnitt 22 angeordnet sein. Dabei kann das zweite Passwort PW2 statt der oder zusätzlich zu den im CRC-Sicherungsfeld 26, im Datenfeld 25 und/oder im Kopfabschnitt 22 enthaltenen Daten übertragen werden.

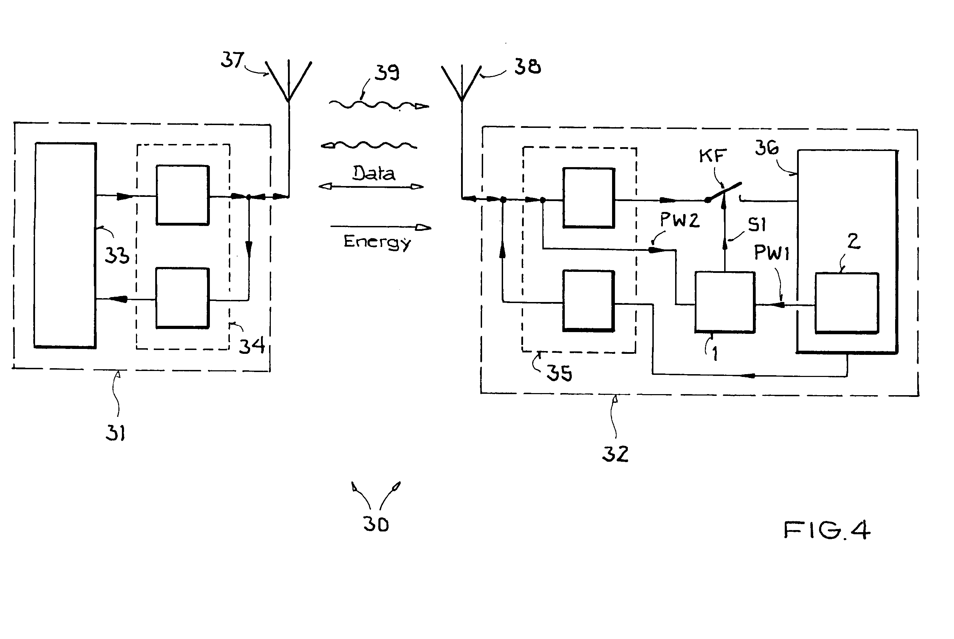

Figur 4 zeigt anhand eines Blockschaltbildes den Aufbau eines RFID-Kommunikationssystems enthaltend eine Basisstation und zumindest einen mit einer erfindungsgemäßen Sicherheitseinrichtung ausgestatteten Transponder zur Durchführung des erfindungsgemäßen Verfahrens.

Das mit Bezugszeichen 30 bezeichnete Kommunikationssystem weist eine Basisstation 31 sowie einen Transponder 32 auf. Basisstation 31 und Transponder 32 stehen dabei in kommunikativer Verbindung zueinander.

Die Basisstation 31 weist zu diesem Zwecke eine Steuereinrichtung 33 zur Steuerung der Datenkommunikation sowie eine Sende-/Empfangseinrichtung 34 (Transceiver) auf. In gleicher Weise weist der Transponder 32 eine Sende-/Empfangseinrichtung 35 (Transceiver) sowie eine Steuereinrichtung 36 auf. Die Sende-/Empfangseinrichtung 34 der Basisstation 31 ist dazu ausgelegt, über die Antenne 37 hochfrequente Trägersignale 39 zu einer Antenne 38 des Transponders 32 zu senden.

Der Transponder 32 weist nun zur Durchführung des erfindungsgemäßen Verfahrens eine Sicherheitseinrichtung 1, wie sie beispielsweise anhand der Figuren 1 und 2 beschrieben wurde, auf. In Figur 4 ist, im Unterschied zu dem Ausführungsbeispiel in Figur 1, der Speicher 2, in dem das Passwort PW1 abgelegt ist, als externer Speicher ausgebildet, der zum Beispiel in der Steuereinrichtung 36 des Transponders 32 angeordnet ist.

Der Sicherheitseinrichtung 1 werden über die Sende/Empfangseinrichtung 35, die zum Beispiel als RSSI-Schaltung (RSSI = Received Signal Strang Indicator) ausgebildet ist, die von der Basisstation 31 gesendeten Trägersignale 39 zugeführt, die das zweite geheime Passwort PW2 enthalten. Der Sicherheitseinrichtung 1 bzw. die darin enthaltene kryptologische Einrichtung 4 leitet daraus die Prüfsumme PW2' ab. Die erfindungsgemäße Sicherheitseinrichtung 1 erzeugt, sofern das aus dem Speicher 2 ausgelesene erste Passwort PW1 und die ermittelte Prüfsumme PW2' identisch sind, ein Steuersignal S1, über welches der Transponder 32 dauerhaft oder temporär deaktiviert werden kann. Diese so genannte Kill-Funktionalität beziehungsweise Cloak-Funktionalität ist in Figur 4 mit dem entsprechenden Bezugszeichen KF bezeichnet.

Für ein Aktivieren der Kill-Funktionalität beziehungsweise Cloak-Funktionalität muss nicht notwendigerweise das Trägersignal 39 von der Basisstation 31 verwendet werden. Hier kann ein beliebiges Signal mit dem Passwort PW2 verwendet werden, sofern dies von dem Transponder 32 als Passwort erkannt wird.

An dieser Stelle sei angemerkt, dass die Darstellung der Sicherheitseinrichtung 1 im Transponder 32 keine schaltungstechnisch exakte Darstellung bezeichnen soll, sondern lediglich die Einbettung der Sicherheitseinrichtung 1 im Transponder 32 sowie dessen Funktion darstellen soll. Es versteht sich von selbst, dass die Funktion der Sicherheitseinrichtung zumindest zum Teil in der Steuereinrichtung 36 und/oder in der Empfängerschaltung vorgesehen ist, zumindest was den Speicher 2 und die CRC-Einrichtung 4 angeht. Insbesondere soll die Killfunktion KF auch nicht notwendigerweise als Schalter verstanden werden. Vielmehr kann diese Killfunktion KF beliebig ausgestaltet werden, so zum Beispiel als steuerbarer Schalter (zum Beispiel als MOSFET), als Fuse oder dergleichen.

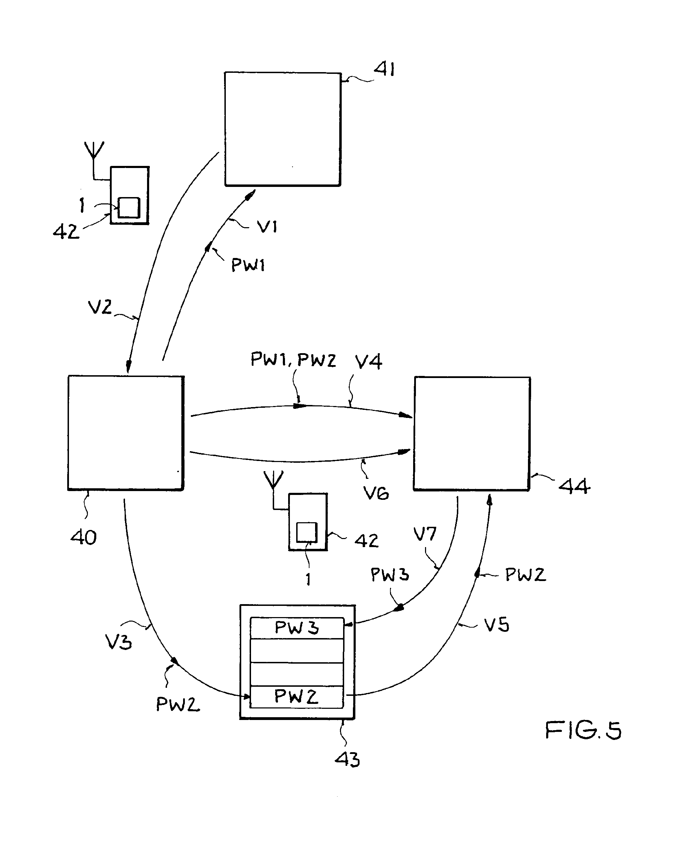

Figur 5 zeigt ein schematisches Blockschaltbild zur Darstellung einer vorteilhaften Anwendung 45 des erfindungsgemäßen Systems beziehungsweise eines erfindungsgemäßen Datenkommunikationssystems.

In Figur 5 sind mit Bezugszeichen 40 ein berechtigter Nutzer und mit Bezugszeichen 41 ein Hersteller von Transpondern bezeichnet. Der berechtigte Nutzer ermittelt aus einem zweiten, nur ihm bekannten Passwort PW2 ein erstes, offenes Passwort PW1, welches er dem Hersteller 41 mitteilt (V1). Zusätzlich wird dem Hersteller 41 die jeweilige Konfiguration des Transponders mitgeteilt, die der berechtigte Nutzer 40 wünscht. Der Hersteller 41 erzeugt nun für den berechtigten Nutzer 40 mehrere Transponder 42, die jeweils eine entsprechend den von dem berechtigten Nutzer 40 gemachten Vorgaben und dem ersten offenen Passwort PW1 entsprechende erfindungsgemäße Sicherheitseinrichtung 1 aufweisen (V2). Ausschließlich der berechtigte Nutzer 40 ist nun in der Lage, diese erfindungsgemäße Sicherheitseinrichtung 1 in seinen Transpondern 42 bestimmungsgemäß zu nutzen.

Ferner ist eine zentrale Datenbank 43 vorgesehen. Der berechtigte Nutzer 40 hinterlegt nun das zweite, lediglich ihm bekannte Passwort PW2 in dieser zentralen Datenbank 43 (V3). Auf diese Weise können weitere Nutzer 44 ebenfalls die von dem berechtigten Nutzer 40 über das zweite Passwort PW2 konfigurierte Sicherheitseinrichtung 1 betreiben, sofern ihnen das zweite Passwort PW2 sowie gegebenenfalls das erste Passwort PW1 kennen. Dies wird zum Beispiel dann möglich, wenn der berechtigte Nutzer 40 den übrigen Nutzern 44 das jeweilige Passwort PW2 mitteilt (V4) oder ihnen ermöglicht, dieses Passwort PW2 aus der zentralen Datenbank 43 auszulesen (V5). Die weiteren Nutzer 44 können nun beispielsweise über Internet das zweite Passwort PW2 aus der zentralen Datenbank 43 auslesen oder anderweitig ermitteln (V5), sofern ihnen die entsprechenden Zugangsinformationen von dem berechtigten Nutzer 40 mitgeteilt werden (V4).

Zusätzlich kann auch vorgesehen sein, dass die jeweiligen Transponder 42 oder die mit diesen Transpondern 42 ausgestatteten Gegenstände von dem berechtigten Nutzer 40 an einen weiteren Nutzer 44 übergeben wird (V6), beispielsweise wenn sie verkauft werden. In diesem Falle wird gleichzeitig mit der Übergabe (V6) der Transponder 42 beziehungsweise der entsprechenden Gegenstände, die diese Transponder 42 aufweisen, dem weiteren Nutzer 44 das erste offene Passwort PW1 sowie das zweite geheime Passwort PW2 mitgeteilt (V4). Dieser Nutzer 44 ist nun der neue berechtigte Nutzer 44.

In einer sehr vorteilhaften und zweckmäßigen Ausgestaltung ist nun der neue berechtigte Nutzer 44 in der Lage, das zweite geheime Passwort PW2 abzuändern. Der neue berechtigte Nutzer 44 ermittelt aus der Kenntnis der genauen Verschaltung der Sicherheitseinrichtung 1 und dem ersten und zweiten Passwörtern PW1, PW2 nun ein drittes, nur ihm bekanntes geheimes Passwort PW3. Der neue berechtigte Nutzer 44 ändert die Sicherheitskonstellation in der Sicherheitseinrichtung 1 durch Verwendung des neuen geheimen Passwortes PW3 sowie durch entsprechende Modifizierung des neuen offenen Passworts, um so zu verhindern, dass der vormalige berechtigte Nutzer 40 noch Zugriff auf die Sicherheitseinrichtung 1 in den Transpondern 42 hat oder die entsprechenden Passwörter PW1, PW2 anderen, nicht berechtigten Nutzern mitteilt. In diesem Falle ist der vormalige berechtigte Nutzer 40 nun nicht mehr berechtigt, da er das neue Passwort PW3 nicht kennt, und kann somit die Sicherheitseinrichtung 1 in den entsprechenden Transpondern 42 auch nicht mehr bestimmungsgemäß betreiben. Dieses dritte geheime Passwort PW3 kann er nun seinerseits in der zentralen Datenbank 43 ablegen (V7).

Nachfolgend wird das der erfindungsgemäßen Sicherheitseinrichtung zugrunde liegende Verfahren zur Installierung einer Kill- bzw. Cloak-Funktion auf Protokollebene kurz beschrieben:

Im Protokoll der Datenübertragung werden Sicherungselemente wie zum Beispiel eine CRC-Prüfsumme eingesetzt, um die Übertragungsstrecke gegen Verfälschungen des Datenstromes abzusichern. Dieses CRC-Register wird jeweils für den Vorwärtslink wie auch für den Rückwärtslink eingesetzt. Dazu wird in der Regel die Sicherungseinrichtung zu Begin des jeweiligen Links initialisiert.

Wird nun ein Datenstrom von der Basisstation zum Transponder übertragen, so berechnet der Transponder mit Hilfe eines CRC-Registers eine CRC-Prüfsumme. Nach der Übertragung der eigentlichen Daten sendet die Basisstation entweder die von ihm berechnete CRC-Prüfsumme oder den inversen Wert der CRC-Prüfsumme. Wird die CRC-Prüfsumme gesendet, so ist der Endwert des CRC-Registers 0. Wird die inverse CRC-Prüfsumme übertragen, so ergibt sich immer ein bestimmter aber konstanten Rest der ungleich 0 ist. Ist das Endergebnis gültig, dann wird das Kommando akzeptiert.

Der Kill-Befehl wird in dem Sinne verwendet, dass es ein Programmieren des Speichers bzw. einer Zelle oder eines Bereiches des Speichers auslöst. Der Unterschied zu einem herkömmlichen Programmieren ist aber, dass die Basisstation kein Programmier-Befehl sondern einen Kill-Befehl sendet. Ein weiterer Unterschied besteht darin, dass der Transponder zwar eine CRC-Prüfsumme berechnet, dieses aber nicht als Prüfkriterium für die Ausführung des Kill-Befehl herangezogen wird. Vielmehr wird das Ergebnis einer bestimmten Stufe oder eines Signals des CRC-Registers als Operand für einen nachfolgenden Vergleich verwendet. Hierbei wird der neue Operand mit einer Stelle im Speicher vergleichen (Gleichheit). Ist diese Gleichheit gegeben, dann wird die Überprüfung des nächsten Bits freigeschaltet. Ist das Ende des Vergleichs erreicht, dann wird geprüft, ob der Vergleich erfolgreich war. War der Vergleich erfolgreich, dann wird das Programmieren des Speichers freigegeben. War der Vergleich nicht erfolgreich, dann wird die Prozedur (programmieren) mit der längsten Programmierdauer so ausgeführt, dass dies nur Zeit kostet, allerdings ein Programmieren nicht stattfindet. Diese Prozedur stellt sicher, dass die Basisstation überprüfen kann, ob das entsprechende Bit im Speicher gesetzt wurde oder nicht.

Dieses Bit wirkt sich aber erst nach dem Programmieren mit anschließendem einmaligen Lesen aus. Dies ist auch die so genannte Default-Einstellung, da der Programmierbefehl ein direktes Lesen nach dem Programmieren zulässt, ohne dass ein Lese-Befehl gesendet wird. Darüber hinaus wirkt sich das Bit auch nach einem so genannten "Reset" des Schaltkreises oder eines Teiles des Schaltkreises aus. In diesem Fall wird das Bit gelesen und sperrt zum Beispiel die RSSI-Empfangsschaltung des Transponders ab, so dass der Transponder nunmehr keine Daten mehr empfangen kann.

Somit ist sichergestellt, dass der Hersteller nur einen Teil des Geheimnisses kennt. Er weiß, welche Stelle des CRC-Registers als Operand verwendet wird. Weiterhin kennt er das Endekriterium des Protokolls, was aber letztlich für alle Befehle gleich ist und somit kein Geheimnis darstellt, außer das mit dem Kunden vereinbart wurde, dass zum Beispiel der Wert des Bitpointers, also des Zeigers auf die entsprechende Stelle im Speicher, mit überprüft wird und in das Ergebnis, das zur Freigabe des Programmierens führt, einfließt. Hierbei wird in der Regel aber eine Mindestlänge des jeweiligen Passwortes vereinbart.

Mit dem berechtigten Nutzer kann auch vereinbart werden, wie oft diese Prozedur durchgeführt werden muss, weil zum Beispiel bei jedem Kill-Befehl ein anderes Bit oder Speicherbereich programmiert wird. Dann muss der Transponder nach dem Reset nur die Summe aus allen Bits bilden oder ein anderes mit dem Kunden vereinbartes Vergleicheskriterium heranziehen.

In Abhängigkeit vom jeweiligen Kill-Befehl oder des mit ihm versandten Parametersatzes kann auch die genaue Stelle des Abgriffs im CRC-Register definiert werden, was eine weitere Flexibilität und somit einen weiter erhöhten Schutz bedeutet. Ebenfalls ist denkbar, dass mehrere Zustände des CRC-Registers oder der zur Prüfung benötigten LFSR-Hardware zum Beispiel einem "Modulo- 1 "- Addierer zugeführt werden. Der Ausgang dieses Addierers ist dann der Vergleichsoperator.

Die beschriebene Lösung ist sehr flexibel und erlaubt es jedem berechtigten Nutzer mit dem Hersteller die direkte Ausführung des Kill-Befehls zu vereinbaren. Der eigentliche Kill-Mechanismus kann für alle Hersteller und berechtigte Nutzer gleich gewählt werden. Was anders ist bzw. was anders sein kann, ist lediglich der Datenstrom selbst und die Anzahl der zu übertragenden Bits bzw. Kill-Befehle.

Ein signifikanter Vorteil des Verfahrens besteht auch darin, dass der berechtigten Nutzer das Ziel des Vergleichs, also die Anfangsadresse und ggf. die Endadresse im Speicher, selbst bestimmen kann.

Ein weiterer Vorteil ist, dass die Anzahl der Daten variable sein kann, es sei denn es wurde etwas anderes vereinbart, so dass eine Vielzahl unterschiedlicher Implementierungen möglich sind.

Dadurch dass der Bitpointer auf den Speicher mit einer Autodekrement bzw. Autoinkrement Funktionalität ausgestattet sein kann, sind auch sehr lange Passwörter möglich. Dies Begrenzung des Passworts bildet hier der Speicher selbst. Außerdem muss der Inhalt des Speichers zumindest dem berechtigten Nutzer bekannt sein. Das kann aber erreicht werden, wenn der Speicherbereich zuerst ausgelesen wird, um die Daten zum Beispiel per Internet dem berechtigten Nutzer mitzuteilen. Aus den Daten kann dann dieser berechtigten Nutzer das zweite, geheime Passwort berechnen und übermitteln. Somit ist es auch möglich variable Transponder bezogenen Passwörter zu unterstützen.

Ist das Datum, welches dem berechtigten Nutzer übermittelt wird, ein Identifikationscode, dann können auch weitere Informationen zum berechtigten Nutzer übertragen werden, wie zum Beispiel welchen Wert der Startpointers (zum Beispiel auf das zweite, geheime Passwort) haben muss, da das CRC-Register wird auch durch diese Informationen mit beeinflusst.

Eine weitere Möglichkeit ergibt sich, wenn die eigentliche Protokollstruktur für diesen Kill-Befehl verändert wird. Der Vorwärtslink VL eine Informationspakets 21 ist durch den Kopfabschnitt 22, den Mittelabschnitt 23 und den Endabschnitt 24 definiert. Der Mittelabschnitt 23 enthält ein Kommandofeld 25, eventuell weitere Daten wie Parameter, Adressen und Operanden, wie zum Beispiel für den Vergleich oder zum Programmieren. Weiterhin kann der Mittelabschnitt 23 ein CRC-Sicherungsfeld 26 enthalten. Diese CRC-Sicherungsfeld 26 kann aber vorteilhafterweise entfallen, da über das CRC-Sicherungsfeld 26 ja nicht das CRC-Register selbst geprüft werden soll. Vielmehr soll das CRC-Sicherungsfeld 26 lediglich als Berechnungseinheit verwendet werden, um einen zweiten Operanden, also die CRC-Prüfsumme, zu ermitteln.

Eine weitere Möglichkeit ergibt sich, wenn der Endabschnitt 24 mit verwendet wird. Insbesondere kann der Endabschnitt 24 als zweite Protokollebene bei der Zusammenstellung des zweiten, geheimen Passwortes betrachtet, dann ist auch hier eine Erweiterung des zweiten, geheimen Passwortes möglich. Weiterhin kann die genaue Position des zweiten, geheimen Passwortes, welche im Endabschnitt 24 übertragen wird, ebenfalls mit in die letztendliche Freigabe des Programmierens mit einfließen. Vorteilhaft ist auch, dass das zweite, geheime Passwort im Endabschnitt 24 mit einem Code beginnt, damit es sich von den anderen Befehlen, die ebenfalls über den Endabschnitt 24 übertragen werden, unterschieden werden kann.

Weiterhin ist es möglich, dass im Endabschnitt 24 per Befehl die Pointeradresse geändert, wobei ein Befehl im Endabschnitt 24 einen anderen Befehl als zu Beginn des Vorwärtslinks VL bezeichnet. Hier bietet sich ein quasi 2-Bit-Befehl an, welches in seiner Kodierung zumindest aussagt, dass es sich hier um eine Erweiterung der Killfunktionalität handelt. Dieser 2-Bit-Befehl kann zum Beispiel wie folgt ausgestaltet sein:
00: Anpassung des Transponder-Oszillators, Vorskallierung folgt
01: kill-Befehl folgt
10: Befehl für aktiven Transponder folgt
11: Reserviert für weitere Nutzung

Weiterhin ist es möglich, dass in dieser Prozedur eine Zufallszahl vorgesehen ist, die auf dem Transponder ermittelt und der Basisstation mitgeteilt wird. Mittels der Zufallszahl wird bei jedem Zugriff auf die Sicherheitseinrichtung das Passwort geändert. Dadurch ist sichergestellt, dass ein unberechtigter Zugriff erschwert wird, weil das Zufalls-Ergebnis Bestandteil des erfindungsgemäßen Verfahrens ist und sich somit das zweite, geheime Passwort zwangläufig nach jedem neuerlichen unberechtigter Zugriff ändert.

In einer sehr vorteilhaften Ausgestaltung der Erfindung können nun entsprechend einer bestimmten Befehlssequenz in einem Speicher ein oder mehrere Bits gespeichert oder gelöscht werden, die kennzeichnen, dass der Transponder deaktiviert sein soll. Löschen bietet sich hier vorteilhafterweise an, da es dem "Urzustand" entspricht und so genannte "Data Retention" Probleme hier nicht bekannt sind.

Obgleich die vorliegende Erfindung vorstehend anhand eines bevorzugten Ausführungsbeispiels beschrieben wurde, ist sie darauf nicht beschränkt, sondern auf vielfältige Art und Weise modifizierbar.

Die Erfindung sei insbesondere nicht ausschließlich auf RFID-Systeme beschränkt, sondern lässt sich selbstverständlich auch erweitern, beispielsweise für die Einzelteilerkennung (engl: item identification). Häufig müssen einzelne Teile nicht eindeutig erkannt werden. Hier reicht es auch meist aus, dass ein Vorhandensein beispielsweise eines fehlerhaften Teils ausgeschlossen werden kann. Dies wird meist auch als nicht eindeutige Identifikation bezeichnet. Beim Betrieb des Transponders in diesem Zusammenhang weist dieser die Funktion eines fernsteuerbaren Sensors (engl: remote sensor) auf. Die Erfindung betrifft also auch ausdrücklich solche Sensoren, bei denen eine Kommunikation zum Auslesen und Beschreiben von Daten eines Datenträgers bzw. Sensors vorgenommen werden. Als Beispiel für eine solche so genannte ferngesteuerte Sensoranwendung sei auf einen Temperatursensor, einen Drucksensor oder dergleichen verwiesen.

In Figur 4 wurde der Übersichtlichkeit halber der Aufbau der Basisstation sowie des Transponders bewusst stark vereinfacht dargestellt. Es versteht sich von selbst, dass die für eine Datenkommunikation zwischen Basisstation und Transponder erforderlichen Funktionseinheiten wie Demodulator, Energieversorgung, Synchronisationseinrichtung, Dekodierer und dergleichen selbstverständlich in diesen Einheiten vorhanden sind. Das gleiche gilt natürlich auch für den Aufbau der Sicherheitseinrichtung entsprechend den Figuren 1 und 2, die - wie bereits vorstehend erwähnt wurde - beliebig komplex ausgestaltet werden kann, je nach dem welche Sicherheit diese Sicherheitseinrichtung gewährleisten soll.

Wenngleich die Erfindung vorstehend anhand einer Sicherheitseinrichtung für einen Transponder mit einer als Kill- und/oder Cloak-Funktion ausgebildeten Sicherheitsfunktion beschrieben wurde, sei sie nicht darauf beschränkt, sondern lässt sich auf sämtliche Sicherheits-Funktionalitäten erweitern, die eine einer Kill-Funktion und/oder Cloak-Funktion funktionsgleiche oder funktionsähnliche Funktionalität aufweisen. Wesentlich ist lediglich, dass eine Sicherheitsfunktion für den Zugriff auf die Daten des Transponders vorhanden ist. Eine andere Sicherheits-Funktion ist beispielsweise eine so genannte Restore-Lock-Funktion. Bei einer Sicherheitseinrichtung mit Restore-Lock-Funktion ist es möglich, Speicherbereiche, die gegen ein Überschreiben (lock-Funktion) geschützt sind, zu überschreiben oder alternativ auch die Lock-Funktion zu überschreiben.

### Bezugszeichenliste

- 1: Sicherheitseinrichtung
- 2: Speicher
- 3: Vergleichseinrichtung
- 4: kryptologische Einrichtung, CRC-Register
- 5: Eingang
- 6: Abgriff
- 6a - 6d: Abgriffe
- 7: Ausgang der Sicherheitseinrichtung
- 8: Verknüpfungseinrichtung
- 9: UND-Verknüpfung
- 10: XOR-Verknüpfung
- 11: Modulo-Verknüpfung

- 21: Informationspaket
- 22: Kopfabschnitt
- 23: Mittelabschnitt
- 24: Endabschnitt
- 25: Datenfeld
- 26: CRC-Sicherungsfeld
- 27: zusätzliches Feld
- 28: erstes EOF-Symbol des Endabschnitts
- 29: zweites EOF-Symbol des Endabschnitts
- 30: Kommunikationssystem
- 31: Basisstation
- 32: Transponder
- 33: Steuereinrichtung
- 34: Sende-/Empfangseinrichtung, Transceiver
- 35: Sende-/Empfangseinrichtung, Transceiver
- 36: Steuereinrichtung
- 37: (Basisstation-)Antenne
- 38: (Transponder-)Antenne
- 39: Trägersignale
- 40: berechtigter Nutzer
- 41: Hersteller von Transpondern
- 42: Transponder
- 43: zentralen Datenbank
- 44: weitere Nutzer
- 45: Anwendung

- S1: Steuersignal
- KF: Kill-Funktionalität, Cloak-Funktionalität

- PW1: erstes, offenes Passwort
- PW2: zweites, geheimes Passwort
- PW2': Prüfsumme

## Patentansprüche

1. Sicherheitseinrichtung (1) für einen Transponder mit Sicherheitsfunktion, insbesondere eine Kill- und/oder Cloak-Funktion,
mit einer Speichereinrichtung (2), in der ein erstes, offenes Passwort (PW1) abgelegt ist,
mit einem Eingang (5), in den ein zweites, geheimes Passwort (PW2) einkoppelbar ist,
mit einer mit dem Eingang (5) verbundenen kryptologischen Einrichtung (4), die aus dem zweiten Passwort (PW2) eine Prüfsumme (PW2') erzeugt,
mit einer Vergleichseinrichtung (3), die die Prüfsumme (PW2') und das erste Passwort (PW1) miteinander vergleicht und die bei deren Übereinstimmung einen Sicherheitssteuerbefehl, insbesondere einen Kill- und/oder Cloak-Steuerbefehl (S1), zur Aktivierung und/oder Deaktivierung eines Sicherheitsmechanismus, insbesondere eines Kill- bzw. Cloak-Mechanismus, erzeugt, welcher an einem Ausgang (7) abgreifbar ist.

2. Sicherheitseinrichtung nach Anspruch 1,
**dadurch gekennzeichnet,**
**dass** die kryptologische Einrichtung (4) als Berechnungseinrichtung (4) zur Berechnung der Prüfsumme (PW2') ausgebildet ist.

3. Sicherheitseinrichtung nach einem der vorstehenden Ansprüche,
**dadurch gekennzeichnet,**
**dass** die kryptologische Einrichtung (4) Hardware-basiert ausgebildet ist.

4. Sicherheitseinrichtung nach einem der vorstehenden Ansprüche,
**dadurch gekennzeichnet,**
**dass** die kryptologische Einrichtung (4) als Linear-Feedback-Shift-Register (4) ausgebildet ist.

5. Sicherheitseinrichtung nach einem der vorstehenden Ansprüche,
**dadurch gekennzeichnet,**
**dass** ist die kryptologische Einrichtung (4) als CRC-Register (4) ausgebildet ist.

6. Sicherheitseinrichtung nach einem der vorstehenden Ansprüche,
**dadurch gekennzeichnet,**
**dass** die kryptologische Einrichtung (4) mehrere Abgriffe (6a - 6d) aufweist, über die jeweils ein Signal zur Gewinnung der Prüfsumme (PW2') abgreifbar ist.

7. Sicherheitseinrichtung nach einem der vorstehenden Ansprüche,
**dadurch gekennzeichnet,**
**dass** eine Verknüpfungseinrichtung (8) vorgesehen ist, die mit zumindest einem Abgriff (6, 6a - 6d) der kryptologischen Einrichtung (4) verbunden ist, die die von der kryptologischen Einrichtung (4) ausgangsseitig bereitgestellten Signale miteinander verknüpft und die daraus die Prüfsumme (PW2') erzeugt.

8. Sicherheitseinrichtung nach Anspruch 7,
**dadurch gekennzeichnet,**
**dass** die Verknüpfungseinrichtung (8) eine UND-Verknüfungen (9) und/oder eine XOR-Verknüpfungen (10) und/oder eine ODER-Verknüpfungen und/oder eine Modulo-Verknüpfungen (11) aufweist.

9. Verfahren zur Konfigurieren einer Sicherheitseinrichtung (1) nach einem der vorstehenden Ansprüche,
bei dem zur Erhöhung der Sicherheit beim Betreiben der Sicherheitseinrichtung (1) die interne Verschaltung der kryptologischen Einrichtung (4) komplexer ausgestaltet wird.

10. Verfahren nach Anspruch 9,
**dadurch gekennzeichnet,**
**dass** zur Erhöhung der Sicherheit beim Betreiben der Sicherheitseinrichtung (1) die Bitzahl der kryptologischen Einrichtung (4) erhöht wird.

11. Verfahren nach einem der Ansprüche 9 oder 10,
**dadurch gekennzeichnet,**
**dass** zur Erhöhung der Sicherheit beim Betreiben der Sicherheitseinrichtung (1) die kryptologische Einrichtung (4) zur Gewinnung einer Prüfsumme (PW2') mehrfach durchlaufen wird.

12. Verfahren nach einem der Ansprüche 9 bis 11,
**dadurch gekennzeichnet,**
**dass** zur Erhöhung der Sicherheit beim Betreiben der Sicherheitseinrichtung (1) die Anzahl der Abgriffe (6, 6a - 6d) der kryptologischen Einrichtung (4), über die jeweils ein Signal zur Gewinnung der Prüfsumme (PW2') abgegriffen wird, erhöht wird.

13. Verfahren nach einem der Ansprüche 9 bis 12,
**dadurch gekennzeichnet,**
**dass** zur Erhöhung der Sicherheit beim Betreiben der Sicherheitseinrichtung (1) ein Abgriff der kryptologischen Einrichtung (4), über den ein Signal zur Gewinnung der Prüfsumme (PW2') abgegriffen wird, an einem höherwertigen Flipflop der kryptologischen Einrichtung (4) LFSR-Registers (4) verwendet wird.

14. Verfahren nach einem der Ansprüche 9 bis 13,
**dadurch gekennzeichnet,**
**dass** eine Verknüpfungseinrichtung (8) vorgesehen ist, die die von der kryptologischen Einrichtung (4) ausgangsseitig bereitgestellten Signale miteinander verknüpft und die daraus die Prüfsumme (PW2') erzeugt und dass zur Erhöhung der Sicherheit beim Betreiben der Sicherheitseinrichtung (1) die Anzahl der Verknüpfungselemente (9 - 10) und/oder der Vernetzungsgrad der Verknüpfungseinrichtung (8) erhöht wird.

15. Verfahren nach einem der Ansprüche 9 bis 14,
**dadurch gekennzeichnet,**
**dass** eine zentrale Datenbank (43) vorgesehen ist, in der das zweite Passwort (PW2) abgelegt wird und aus dem das zweite Passwort (PW2) von anderen Nutzern (44), die von einem berechtigten Nutzer (40) der Sicherheitseinrichtung (1) dazu autorisiert werden, auslesbar ist.

16. Verfahren nach einem der Ansprüche 9 bis 15,
**dadurch gekennzeichnet,**
**dass** das zweite Passwort (PW2) geändert wird und dass aus dem geänderten zweiten Passwort (PW2) unter Verwendung der kryptologischen Einrichtung (4) und/oder einer Verknüpfungseinrichtung (8) eine geänderte Prüfsumme (PW2') ermittelt wird, die dann als neues erstes Passwort (PW1) in der Speichereinrichtung (2) abgelegt wird.

17. Verfahren nach Anspruch 16 ,
**dadurch gekennzeichnet,**
**dass** die Änderung des zweiten Passwortes (PW2) nach einer vorgegebenen Anzahl an Zugriffen auf die Sicherheitseinrichtung (1), insbesondere nach jedem Zugriff auf die Sicherheitseinrichtung (1) vorgenommen wird.

18. Verfahren nach einem der Ansprüche 16 oder 17,
**dadurch gekennzeichnet,**
**dass** die Änderung des zweiten Passwortes (PW2) automatisch durch Verwendung einer Zufallszahl vorgenommen wird.

19. Verfahren zum Betreiben eines Transponders (32) mit einer Sicherheitseinrichtung (1) nach einem der Ansprüche 1 bis 8, bei für die drahtlose Datenübertragung von einer Basisstation (31) zu dem Transponder (32) ein hochfrequentes elektromagnetischen Trägersignal (39) vorgesehen ist, auf welchem Informationspakete (21) aufmoduliert sind, wobei jeweils ein Informationspaket (21) einen Kopfabschnitt (22), einen Mittelabschnitt (23) und einen abschließenden Endabschnitt (24) aufweist,
**dadurch gekennzeichnet,**
**dass** das zweite Passwort (PW2) an einer vorgegebenen Stelle innerhalb des Informationspakets (21) angeordnet wird.

20. Verfahren nach Anspruch 19,
**dadurch gekennzeichnet,**
**dass** der Mittelabschnitt (23) ein Datenfeld (25) mit zumindest einem an den Transponder (32) zu übertragenden Befehl sowie ein sich an das Datenfeld (25) anschließendes Sicherungsfeld (26) zur Absicherung der im Datenfeld (25) übertragenen Daten aufweist, wobei das zweite Passwort (PW2) im Bereich des Sicherungsfeldes (26) eingefügt wird.

21. Verfahren nach einem der Ansprüche 19 oder 20,
**dadurch gekennzeichnet,**
**dass** der Endabschnitt (24) zumindest zwei EOF-Symbole (28, 29) aufweist, welche zusammen das Ende eines Informationspaket (21) anzeigen, wobei zwischen den beiden EOF-Symbolen (28, 29) ein zusätzliches Feld (27) angeordnet ist, in welches das zweite Passwort (PW2) eingefügt wird.

22. Transponder (32) zur Datenkommunikation mit zumindest einer Basisstation (31),
- mit einer Sende-/Empfangseinrichtung (35) zum Empfangen hochfrequenter Trägersignale (39) einer Basisstation (31),
- mit einer Steuereinrichtung (36), die die Datenkommunikation mit der zumindest einen Basisstation (31) steuert,
- mit einer Sicherheitseinrichtung (1) nach einem der Ansprüche 1 bis 8.

23. Transponder nach Anspruch 22,
**dadurch gekennzeichnet,**
**dass** ein zweites CRC-Register (4) zur Verifikation der bei der Datenkommunikation zwischen der Basisstation (31) und dem Transponder (32) übertragenen Daten vorgesehen ist, wobei das CRC-Register (4) der Sicherheitseinrichtung (1) zugleich das zweite CRC-Register (4) des Transponders (32) bildet.
